# EUROPÄISCHE PATENTSCHRIFT

(11) **EP 0 510 550 B1**
(45) Veröffentlichungstag und Bekanntmachung des Hinweises auf die Patenterteilung: **24.08.1994**
(21) Anmeldenummer: 92106706.2
(22) Anmeldetag: 17.04.1992
(51) Int. Cl.: B60C 11/00, B60C 11/06

(54) **Fahrzeugluftreifen mit Profilrillen und Verfahren zu seiner Herstellung**
Pneumatic vehicle tyre with tread grooves and process for its manufacture
Bandage pneumatique pour véhicule comportant des rainures dans le profil et procédé permettant sa fabrication

(30) Priorität: 22.04.1991 DE 4113062; 06.08.1991 DE 4125978
(43) Veröffentlichungstag der Anmeldung: 28.10.1992
(73) Patentinhaber: Continental Aktiengesellschaft, 30165 Hannover (DE)
(72) Erfinder: Kleinhoff, Klaus, W-3054 Rodenberg (DE)

(56) Entgegenhaltungen:
- DE-A- 1 480 981
- DE-A- 1 579 167
- DE-B- 1 194 721
- US-A- 2 272 891
- PATENT ABSTRACTS OF JAPAN vol. 10, no. 346 (M-537)(2402) 21. November 1986 & JP-A-61 146 605 (BRIDGESTONE CORP.), 4 Juli 1986
- PATENT ABSTRACTS OF JAPAN vol. 13, no. 415 (M-870)(3763) 13. September 1989 & JP-A-1 153 305 (SUMITOMO RUBBER IND.) 15. Juni 1989
- PATENT ABSTRACTS OF JAPAN, vol. 7, no. 112 (M-215)(1257) 17. Mai 1983 & JP-A-58 033 504 (SUMITOMO GOMU KOGYO K.K.) 26. Februar 1983

## Beschreibung

Die Erfindung bezieht sich auf einen Fahrzeugluftreifen mit Profilrillen in der Lauffläche, die im wesentlichen aus einer Gummimischung besteht und umfaßt Verfahren zur Herstellung erfindungsgemäßer Reifen.

Störenderweise nehmen diese bekannten Reifen in ihren Rillen auf der Fahrbahnberfläche liegende Steine auf, die infolge der Walkbewegungen - entgegen der Fliehkraft - radial einwärts wandern und erst bei hoher Geschwindigkeit wieder ausgeworfen werden. Diese Störungen treten etwa ab einer Profiltiefe von 11 mm deutlich auf und zwar umso mehr, desto geringer die höchste Betriebsgeschwindigkeit ist. Das Problem tritt also insbesondere an LKW-Reifen auf und dort hauptsächlich an den im wesentlichen in Umfangsrichtung verlaufenden Profilrillen, die nachfolgend als Umfangsrillen oder Längsrillen bezeichnet werden.

Aus der älteren, nichtvorveröffentlichten DE-A 41 07 916.7 ist ein Fahrzeugreifen mit im Querschnitt wellenförmig verwundenen Längsrillen bekannt mit charakteristischen Versätzen des Rillengrundes. Dies ergibt eine deutliche Verringerung des schädlichen Steinefangens, kann jedoch nur mit neuen, kostspieligen Formeinsätzen (mold) verwirklicht werden.

Die gattungsgemäße DE-A 1 480 981 lehrt Fahrzeugluftreifen mit Profilrillen, deren Flanken zur Schärfeerhaltung der Klotzkanten mit einer sehr abriebfesten und vorzugsweise harten Gummimischung überzogen sind, zwecks verringerten Naßrutschens.

Im US-PS 3,462,328 wird die Beschichtung von Profilnegativen (recessed portions) einer Reifenlauffläche mit Polyurethan gelehrt zur Verbesserung der Abrieb- und Traktionseigenschaften oder zur Erzielung dekorativer Effekte. Ausweislich Spalte 2, Zeile 69 bis Spalte 3, Zeile 6 werden der Polyurethanschicht vorzugsweise reibungserhöhende Mittel wie geschredderter Draht, Fasern aller Art oder Nußschalen beigemischt.

Aufgabe vorliegender Erfindung ist es, das Steinefangen auch ohne Verwendung neuer Formeinsätze in den Vulkanisationsformen zu verbessern. Besonders erwünscht sind Lösungen, an denen überhaupt keine Eingriffe an den kapitalintensiven Vulkanisationsformen nötig sind.

Die Aufgabe wird erfindungsgemäß dadurch gelöst, daß die Flanken der Rillen mit einem reibungsverminderndem Material belegt sind, sodaß der reibungsvermindernde Belag auf den Flanken gegenüber Steinen einen geringeren Reibungsbeiwert (») aufweist als die Gummimischung in der Peripherie der Lauffläche. Als Peripherie der Lauffläche werden im Rahmen dieser Anmeldung die Bereiche der Lauffläche bezeichnet, die - im Gegensatz zu den Profilrillenflanken und Profilrillengründen - auch auf fester und ebener Fahrbahn beim Abrollen mit eben dieser Fahrbahn in Berührung kommen.

Vorzugsweise weist der reibungsvermindernde Belag gegenüber Steinen einen Reibungsbeiwert (») von weniger als 0,6 oder - noch besser - von weniger als 0,4 auf.

Der Erfindung liegt die Erkenntnis zugrunde, daß die gefangenen Steine während der Fangphase einen Zyklus an Mikrobewegung durchlaufen, wobei dieser Zyklus im wesentlichen in zwei Phasen aufzuteilen ist: Während des relativ kurzdauernden Durchlaufes der Bodenaufstandsfläche entsteht eine den Stein nach innen fördernde Walkbewegung, wohingegen während der Restdrehung bis zum nächsten Durchlauf der Bodenaufstandsfläche eine nach außen gerichtete, der Fliehkraft folgende Gleitbewegung entsteht.

Während es der zuvor genannten DE-A-4 107 916.7 primär darum geht, den Bewegungsteil des Eindringens zu mindern, geht es vorliegender Erfindung darum, den Bewegungsteil des Entkommens zu vergrößern. Durch Verringerung der Reibung zwischen eingedrungenem Stein und Rillenflanke kommt die Fliekraft ungehinderter zur Geltung, wodurch sich eine Senkung der Grenzgeschwindigkeit ergibt, ab der eingedrungene Steine ausgeworfen werden und keine neuen eingefangen werden.

In der Reifenentwicklung ist aus fahrtechnischen und aus Sicherheitsgründen ein möglichst hoher Reibungsbeiwert zwischen Lauffläche und Fahrbahn erwünscht. Je nach Fahrzeugkategorie werden Reibungsbeiwerte zwischen » = 0,80 und » = 0,95 erreicht. Aufgrund dieses seit Jahrzehnten dringlich verfolgten Entwicklungszieles erschien der Vorschlag eines deutlich verringerten Reibungsbeiwertes im Laufflächenbereich zunächst als Kunstfehler. Ein Pfiff der Erfindung liegt in der geometrisch engen Begrenzung der Reibwertsenkung, nämlich auf den Bereich der Rillenflanken und eventuell der Rillengründe unter Ausschluß der Laufflächenperipherie.

Neben der geometrischen Differenzierung zwischen den Laufflächenbereichen, wo weiterhin ein hoher Reibungsbeiwert angestrebt wird und den Bereichen, wo erfindungsgemäß ein geringer Reibungsbeiwert angestrebt wird, ist für den Erfolg der Erfindung wesentlich, daß der reibungsvermindernde Belag an der darunter befindlichen Gummimischung, in der Regel also der Gummimischung der Laufflächenperipherie, gut haftet, sodaß es zu keinen Ablösungen kommt. Außerdem sollte die erforderliche hohe Haftung ohne der Automatisation und/oder dem Umweltschutz feindliche Reinigungsschritte, zusätzliche Haftungs vermittelnde Schichten und dergleichen erreicht werden.

Deshalb scheidet Polyurethan als Polymer für den reibungsvermindernden Belag aus, obwohl damit eine besonders geringe Hysterese möglich ist. Schließlich gelang es, ausreichend niedrige Reibungsbeiwerte auch mit Gummi zu erreichen, was durchaus nicht naheliegend war, weil üblicherweise das Gegenteil gefordert wird. Die verschiedenen Gummiqualitäten lassen sich in an sich bekannter Weise miteinander fügen.

Es hat sich als vorteilhaft zur Erzielung ausreichender Haftung zwischen reibungsverminderndem Belag und der darunter befindlichen Gummimischung herausgestellt, daß der reibungsvermindernde Belag ebenfalls aus einer Gummimischung besteht. Durch Aufbringen des reibungsvermindernden Belages im unvulkanisierten Zustand auf den unvulkanisierten Rohling und gemeinsamer Behandlung in der Vulkanisationspresse wird die höchste Haftung erzielt.

Die Kautschukmischung zur Erstellung des reibungsvermindernden Belages ist zweckmäßigerweise nur gering gefüllt und weist eine hohe Vernetzung auf, die durch hohe Beschleunigerdosierung im Verhältnis zu den darunter liegenden Kautschukmischungen und/oder durch großen Temperaturgradienten während der Vulkanisation (hohe Vulkanisationstemperatur bei kürzerer Vulkanisationsdauer) zu erzielen ist. Die eingesetzte Masse Ruß liegt vorzugsweise bei oder unter 35 Kautschukprozent, das heißt, die Rußmasse beträgt weniger als oder gleichviel wie das 0,35-fache der Masse aller Kautschuke innerhalb der Kautschukmischung. Als Kautschuke empfehlen sich Polybutadien und Naturkautschuk sowie deren Verschnitte.

Aufgrund der hohen Vernetzung ist die Abriebbeständigkeit des reibungsvermindernden Belages sehr hoch. Dies ist vorteilhaft, weil dadurch der reibungsvermindernde Belag dünn gehalten werden kann. Aufgrund seiner Dünnheit bleibt die in die Laufflächenperipherie hereinragende Stirnfläche der Flankenbeschichtung klein im Verhältnis zur Aufstandsfläche und infolgedessen ist der über der Aufstandsfläche zu mittelnde Reibungsbeiwert »ₘ annähernd gleich groß wie der Reibungsbeiwert » des Laufflächengummis.

Reibungsbeiwert und Härte einer Gummimischung können in sehr weiten Grenzen unabhängig voneinander durch Wahl eines geeigneten Mischungsrezeptes eingestellt werden. Im Gegensatz dazu ist die Abriebbeständigkeit eng an die Härte gekoppelt. Der Laufflächengummi kann in der Regel nicht so hart ausgelegt werden, weil die Laufgeräusche und die Rißanfälligkeit zu hoch würden. In den bevorzugten Erfindungsvarianten hat deshalb der reibungsvermindernde Belag gegenüber der darunter befindlichen Gummimischung eine erhöhte Härte. Weil die Schubbeanspruchung in der Fügefläche über der Härtedifferenz steigt, darf die Härtedifferenz nicht zu groß sein; nach bisheriger Erkenntnis darf die Härtedifferenz zwischen Gummischichten bis zu 8 Shore-Härtegraden betragen.

Bei besonders hoher Härtedifferenz, empfiehlt sich ein zweischichtiger Aufbau des reibungsvermindernden Belages. Dabei sollte die erste Schicht des reibungsvermindernden Belages eine Härte zwischen der der Laufflächenperipherie und der der zweiten Schicht aufweisen.

Bei einschichtigem Aufbau sollte der reibungsvermindernde Belag um 5 bis 8 Shore-Härtegrade härter sein als das darunter befindliche Gummi und eine Dicke zwischen 0,1 und 1,0 mm aufweisen. Bei mehrschichtigem Aufbau sollte die untere Schicht mindestens 0,3 mm und die obere mindestens 0,4 mm dick sein und der gesamte reibungsvermindernde Belag nicht dicker als 1,2 mm. Die untere Schicht sollte um 3 bis 6 Shore-Härtegrade härter sein als die darunter befindliche Gummimischung und die weiteren Schichten sollten um 2 bis 5 Shore-Härtegrade härter sein als die jeweils darunter befindliche Schicht. - Obwohl der reibungsvermindernde Belag auch aus mehr als zwei Schichten in analoger Weise aufgebaut werden kann, scheint dieser Aufwand selbst bei höchsten Anforderungen nicht erforderlich zu sein; vielmehr reicht in den meisten Fällen eine einzige Schicht aus.

Nach Darlegung dessen, wie der reibungsvermindernde Belag beschaffen sein soll, wird nachfolgend genauer darauf eingegangen, wo sich der reibungsvermindernde Belag befinden sollte (und wann wo nicht). Diese Frage ist eng mit dem angewendeten Herstellungsverfahren verknüpft.

Für die angestrebte Verminderung des Steinefangens, ist es wenig erheblich, ob auch die Profilriilengründe einen reibungsvermindernden Belag aufweisen oder nicht; nur bei stark verrundeten Profilrillengründen zeigt sich eine gewisse Steigerung des Effektes mit reibungsverminderndem Belag auch im Grund.

Da die Belagdicke im Nutengrund entweder die maximale Profiltiefe verringern oder den Abstand zwischen letzter Gürtellage und Laufflächenperipherie vergrößern muß, ergeben sich zumindest für überwiegend auf der Straße gefahrene Reifen kleine Vorteile durch Nicht-Belag der Rillengründe; es wird also für diesen Anwendungsfall eine Beschränkung des reibungsvermindernden Belages auf die Flanken der Profilrillen bevorzugt.

Hierfür empfiehlt sich ein Herstellungsverfahren gemäß Anspruch 15, wonach der reibungsvermindernde Belag als mehrere nebeneinanderliegende Kautschukmischungs-Streifen auf den Rohling gebracht wird und jeder Streifen so ausgerichtet wird, daß nach Abformung in der Vulkanisationsform im wesentlichen nur die Flanken der Profilrillen abgedeckt sind. Werden beide Flanken jeder Profilrille abgedeckt, so sind doppelt so viele Streifen erforderlich, wie der fertige Reifen Profil(längs)rillen aufweisen soll.

Eine Vereinfachung ergibt sich, wenn nur eine Flanke einer jeden Rille einen reibungsvermindernden Belag aufweist. Dann sind weniger Streifen erforderlich. Gemäß Anspruch 10 sollen insbesondere die außermittig liegenden Längsrillen so ausgeführt sein und zwar soll der reibungsvermindernde Belag sich auf den zur Reifenmitte hin weisenden Flanken befinden. Der angestrebte Effekt des verringerten Steinefangens ist nahezu gleich gut erreicht. Neben leichterer Herstellbarkeit hat diese Ausführung den Vorteil, daß bei scharfer Kurvenfahrt, bei der wegen der Seitenwanddeformation nur die kurvenäußere Laufflächenhälfte Last übernimmt, im Zusammenwirken mit der Verbiegung der Profilstege bzw. Profilkötze die Stirnseiten der reibungsvermindernden Rillenflankenbeläge nicht mit der Straßenoberfläche in Kontakt treten, sodaß in diesem Betriebszustand jegliche Reibwertminderung ausgeschlossen ist.

Wegen der konstruktiven und herstellungstechnischen Vorteile der reibungsvermindernden Belegung nur einer der Flanken jeder außermittigen Längsrille weisen die Reifen vorzugsweise keine Mittelrille auf; bei der üblichen symmetrischen Längsrillenanordnung sollte also die Längsrillenanzahl gerade sein. Wo hingegen eine Mittelrille gefordert ist, sind vorzugsweise beide Flanken derselben reibungsvermindernd belegt.

In analoger Weise sollten eventuell vorhandene Querrillen - die insbesondere an geländegängigen Fahrzeugen üblich sind - bei einflankiger reibungsvermindernden Belegung den reibungsvermindernden Belag auf der bezüglich der Drehrichtung nacheilenden Flanke einer jeden Querrille aufweisen. Auf diese Weise ist bei Vollbremsungen jegliche Reibwertminderung durch die Stirnseiten der Flankenbeläge ausgeschlossen.

Zur Erzielung der geometrischen Begrenzung in Kleinstserien oder für Versuchsreifen kann ein Herstellungsverfahren gemäß Anspruch 19 sinnvoll sein, bei dem die geometrische Begrenzung erst nachträglich erstellt wird. Dieses simple Verfahren erfordert beim Reifenaufbau keinerlei Vorkehrungen zur Erzielung der geometrischen Begrenzung der Reibwertminderung.

Die nachträgliche Begrenzung der Reibwertminderung auf die Flanken und Gründe der Profilrillen läßt sich durch hinreichend langen Betrieb der Reifen (auf nichtöffentlichen Straßen) erreichen; durch den wesentlich größeren Abrieb an der Laufflächenperipherie als auf den Rillenflanken stellt sich die geometrische Begrenzung alsbald ein. Alternativ zum Abreiben im Fahrbetrieb ist das Runterschleifen des reibungsvermindernden Gummis von der Laufflächenperipherie möglich.

Für die Großserienfertigung wird die geometrische Begrenzung der Reibwertsenkung vorzugsweise schon am Rohling des Reifens vorgegeben. Auf diese Weise wird sowohl das mit einer reibungsverminderten Lauffläche einhergehende Sicherheitsrisiko als auch der durch Abschleifen vulkanisierten Gummis entstehende Abfall vermieden.

In an sich bekannter Weise sollte die Laufflächenperipherie zumindest im wesentlichen - das heißt allenfalls mit Ausnahme der schmalen Stirnflächen der reibungsvermindernden Beläge auf den Rillenflanken - aus einer Gummimischung bestehen, die einen Reibungsbeiwert gegenüber Asphalt und dergleichen von mindestens 0,8 im Neuzustand des Reifens aufweist.

Bei einer bevorzugten Reibwertbemessung bei der in an sich bekannter Weise die äußere Peripherie der Lauffläche im wesentlichen - das heißt mit Ausnahme der schmalen Stirnflächen der reibungsvermindernden Schichten auf den Rillenflanken - aus Gummi besteht mit einem Reibungsbeiwert (») gegenüber Asphalt (im Neuzustand des Reifens) von etwa 0,85 und der reibungsvermindernde Belag aus einer Gummiqualität besteht, die unter den relevanten Betriebsbedingungen einen Reibungsbeiwert von etwa 0,4 aufweist, ergibt sich bei einflankiger Belegung der Umfangsrillen eines Langstreckenreifens aufgrund des minimalen Flächenanteiles der Flankenstirnflächen an der Aufstandsfläche ein über der Fläche gemittelter Abfall des Reibungsbeiwertes bei Geradeausfahrt von etwa 0,04. Dieser Verlust ist durch Übergang auf eine geringfügig weichere und damit haftfähigere Laufflächenmischung kompensierbar, zumal die harte und damit abriebbeständigere Belegung der im jeweiligen Betriebszustand auslaufenden Profilkanten (bei Querbeschleunigung der kurveninneren Kanten, beim Bremsen der in Umfangsrichtung nacheilenden Kanten) Auswaschungen und Sägezahnbildungen zu vermindern scheinen, sodaß die Lebensdauer insgesamt erhalten bleiben dürfte.

Der erzielte Reibungsbeiwert ist umso niedriger, desto größer die Härte und desto kleiner die Hysterese ist. Umso größer die Härte des Belages gegenüber der Härte des darunter befindlichen Gummis ist, umso geringer muß die Dicke des Belages sein, damit sich der Belag beim Walken nicht vom Laufflächen-Gummi löst.

Je nach Anwendungsfall muß der Schwerpunkt beim Auffinden des optimalen Kompromisses verschieden gesetzt sein:
Der reibungsvermindernde Belag der Rillenflanken muß dem Abrieb durch die eingedrungenen und auszuwerfenden Steine so lange stand halten, bis die Profiltiefe so weit durch Laufflächen-Abrieb verringert ist, daß kaum noch Steine gefangen werden. Diese Grenzprofiltiefe liegt für LKW-Reifen etwa bei 11 mm. Bei der an LKW-Reifen gängigen Profiltiefe von 15 mm braucht der reibungsvermindernde Belag also nur etwa während eines Drittels der Reifenlebensdauer Bestand zu haben. Bei dieser Berechnung ist eine Mindestrestprofiltiefe von 3 mm zugrunde gelegt. Bei einer Vergrößerung der Profiltiefe steigt die erforderliche Lebensdauer des reibungsvermindernden Belages überproportional an; bei Übergang auf eine Profiltiefe von 22 mm steigt die relative Lebensdaueranforderung von 33,3 % auf 42,1 % und die absolute Lebensdaueranforderung ist verdoppelt.

Bei besonders großer Profiltiefe und damit einhergehend besonders großer Lebensdaueranforderung an den reibungsvermindernden Belag sollte der reibungsvermindernde Belag besonders dick ausgeführt sein. Desto dicker der reibungsvermindernde Belag ist, desto geringer sollte sein Härtezuwachs gegenüber dem darunter befindlichen Gummi sein um Schubspannungskonzentrationen in der Fügefläche zu vermeiden. In den Sonderfällen, wo extrem langlebige und somit dicke reibungsvermindernde Beläge erwünscht sind, z. B. im harten Baustelleneinsatz, und dennoch ein extrem niedriger Reibungsbeiwert auf den Flanken läßt sich das Problem der Spannungskonzentrationen durch mehrschichtige Ausführung des reibungsvermindernden Belages lösen.

Zur Herstellung erfindungsgemäßer Reifen empfiehlt es sich, den reibungsvermindernden Belag in Form von Kautschukmischungsstreifen aufzubringen. Es versteht sich, daß je ein Streifen pro zu beschichtender Fläche aufzubringen ist. Beispielsweise sind zur einflankigen reibungsvermindernden Belegung eines Reifens mit 4 Längsrillen 4 Kautschukmischungsstreifen erforderlich. Es kommt darauf an, diese Kautschukmischungsstreifen unter Berücksichtigung der Fließvorgänge beim Schließen der Form genau an den Stellen des Rohlings aufzubringen, wo sich nach der Abformung in der Vulkanisationsform die zu belegenden Flächen befinden. Die erforderliche Position läßt sich für jede Reifentype anhand einer kleinen Versuchsreihe ermitteln.

Um die einmal ermittelte Position auch unter den Bedingungen der Großserienfertigung stets zuverlässig zu reproduzieren, empfiehlt es sich gemäß Anspruch 16, die verschiedenen nebeneinanderliegenden - gegebenenfalls gemaß Anspruch 6 mehrschichtigen - Kautschukstreifen zunächst auf ein biegsames, dehnungssteifes Trägermaterial aufgebracht und ausgerichtet werden, beispielsweise auf eine verstärkte Folie, und an der Reifenaufbaumaschine als letzte Lage eben dieses Trägermaterial mit den Kautschukstreifen nach radial innen weisend aufzulegen, sodaß alle Kautschukstreifen mit einem einzigen Arbeitsgang ausgerichtet sind, wonach das Trägermaterial wieder abgezogen wird.

Die Erfindung wird nachfolgend anhand von dreizehn Figuren näher erläutert, die mit Fig. 1 bis Fig. 8e bezeichnet sind. Es zeigt:
- Fig. 1: im Querschnitt in der Übersicht einen Fahrzeugluftreifen mit Längsrillen,
- Fig. 2: im vergrößerten Querschnitt einen erfindungsgemäßen Reifen mit einem reibungsvermindernden Belag auf allen Flächen der Längsrillen (Flanken + Gründe),
- Fig. 3a: im vergrößerten Querschnitt einen erfindungsgemäßen Reifen mit einem reibungsvermindernden Belag nur auf den Flanken der Längsrillen ,
- Fig. 3b: in weiterer Vergrößerung und Beschränkung des Bildausschnittes auf eine einzige Rille eine solche Abwandlung des erfindungsgemäßen Reifens, wo der reibungsvermindernde Belag auf den Rillenflanken zweischichtig ausgeführt ist,
- Fig. 4: im vergrößerten Querschnitt einen erfindungsgemäßen Reifen mit gerader Anzahl gleichmäßig verteilter Längsrillen und einem reibungsvermindernden Belag nur auf je einer der Flanken der Längsrillen,
- Fig. 5: im vergrößerten Querschnitt einen erfindungsgemäßen Reifen mit ungerader Anzahl gleichmäßig verteilter Längsrillen und einem reibungsvermindernden Belag nur auf je einer der Flanken der außermittig liegenden Längsrillen, während die Mittelrille auf all ihren Flächen reibungsvermindernd belegt ist,
- Fig. 6: im Querschnitt einen Reifen gemäß Figur 4 in Kurvenfahrt in der Übersicht,
- Fig. 7: einen vergrößerten Ausschnitt aus Fig. 6,
- Fig. 8a: für die Herstellung eines Reifens gemäß Fig. 4 einen Verbund aus einem bahnförmigen Trägermaterial mit Kautschukstreifen,
- Fig. 8b: die Ausrichtung des Verbundes,
- Fig. 8c: die Herstellungsphase, wo der Verband aus Fig. 7a gerade auf einen ansonsten fertiggestellten Reifenrohling aufgelegt worden ist, und
- Fig. 8d: den Rohling nach Entfernung des Trägers
- Fig. 8e: den Rohling in sich schließender Vulkanisationsform.

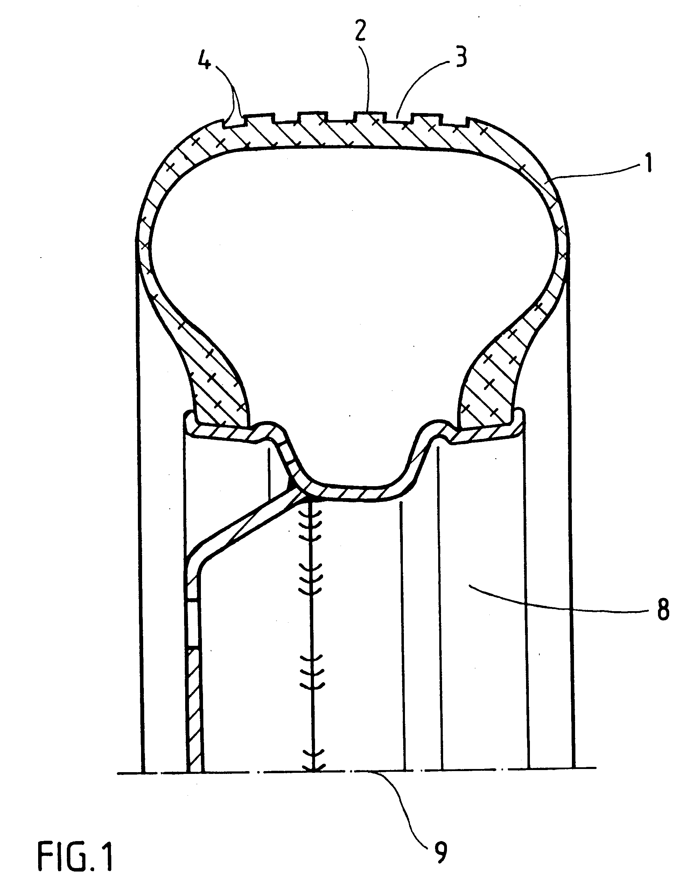

Die Figur 1 zeigt zwecks Übersicht einen Fahrzeugluftreifen 1 mit einer Lauffläche 2, die Profilrillen 3 aufweist und zwar - entsprechend der Gestaltung der meisten LKW-Reifenprofile - ausschließlich in Längsrichtung verlaufende Rillen 3; eine traktionsfördernde Querorientierung wird nur in Form einer Welligkeit der Längsrillen bereitgestellt. Die Profilrillen 3 weisen linke und rechte Flanken 4 auf. Die Felge 8 ist nur der Übersichtlichkeit halber bis zur Radachse 9 mit gezeigt. Ihre Gestaltung hat für die Erfindung keine Bedeutung.

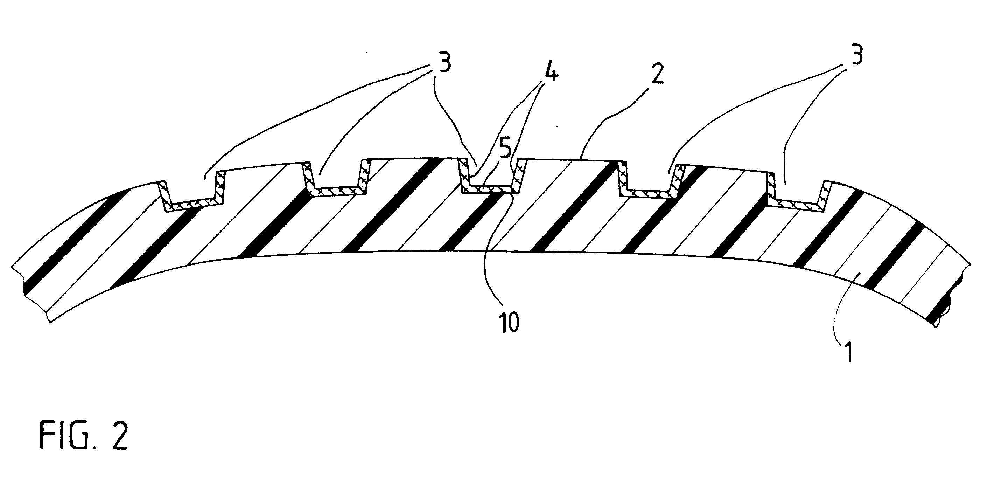

Die erfindungsgemäße Laufflächenausbildung kann wegen ihrer geometrischen Kleinheit in der der Übersicht dienenden Figur 1 nicht dargestellt werden. - Sie wird in den folgenden Figuren 2 bis 5 gezeigt:

Die Figur 2 zeigt einen Schnitt durch die Reifenkrone des Reifens 1, zeigt also insbesondere die Lauffläche 2. Die gezeigte Lauffläche 2 des Fahrzeugluftreifens 1 weist fünf Profillängsrillen 3 auf. Alle fünf Rillen 3 sind mit einem reibungsverminderndem Belag 5 auf den Flanken 4 und im Rillengrund 10 ausgestattet.

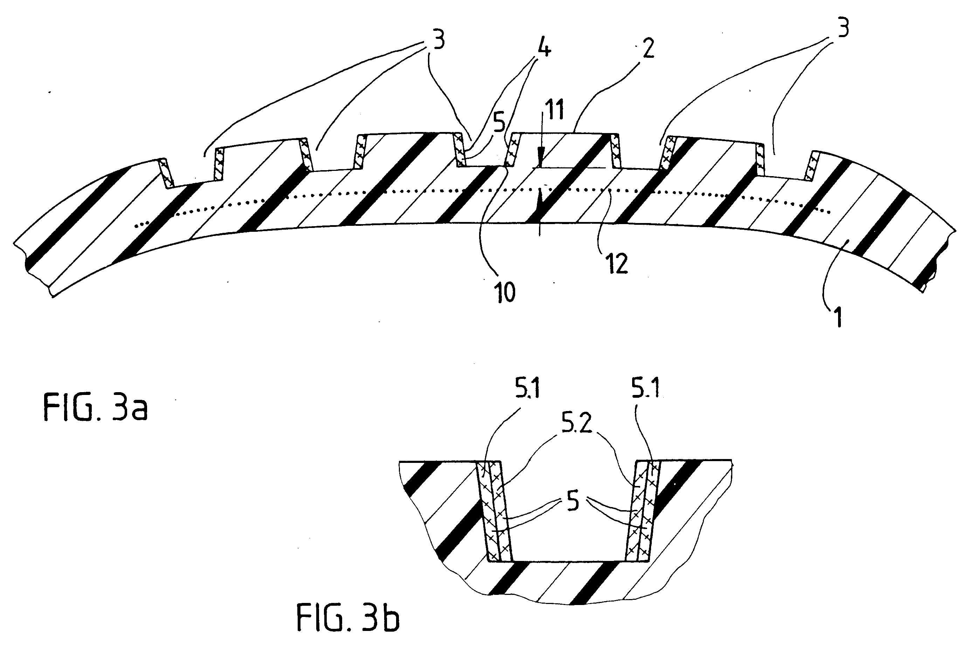

Analog der Darstellungsweise in Figur 2 und unter Verwendung der gleichen Bezugszeichen zeigt die Figur 3a eine insofern abweichende Ausführung, als daß hier der Rillengrund 10 frei von reibungsverminderndem Belag 5 ist. Diese Ausführung hat den kleinen Vorteil, daß die Basis 11 , das ist der Bereich zwischen der obersten Gürtellage 12 und dem Profilrillengrund 10 , unverändert bleibt, wodurch jegliche Änderung in den Nachschneidebedingungen unterbleibt.

Die Figur 3b zeigt in weiterer Vergrößerung eine Rille 3 einer Variante mit zweischichtigem reibungsverminderndem Belag 5, wobei die einzelnen Schichten durch eine nach einem Punkt nachgesetzte weitere arabische Ziffer gekennzeichnet sind. Die erste (unterste) Schicht wird also mit 5.1 , die nächste mit 5.2 und so weiter bezeichnet; zumal schon eine zweischichtige Ausführung - wie im allgemeinen Teil der Beschreibung dargelegt - nur selten erforderlich ist, ist allerdings auf eine Darstellung einer analog auch möglichen dreischichtigen Variante verzichtet worden.

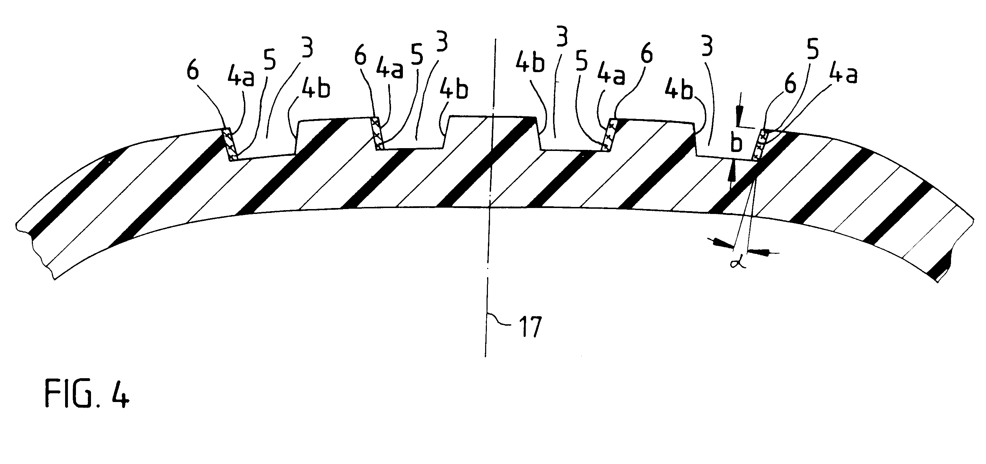

Die Figur 4 zeigt in zur Figur 2 analoger Darstellung eine Ausführungsform der Erfindung mit gerader Anzahl gleichmäßig verteilter Längsrillen 3. Hier ist analog Anspruch 10 jeweils eine Flanke 4b einer jeden Längsrille 3 nicht reibungsvermindernd belegt; es befindet sich also nur auf einer Flanke 4a jeder Rille 3 ein reibungsvermindernder Belag 5.

Entsprechend Anspruch 11 ist diejenige (4a) der beiden Flanken 4 einer jeden Längsrille 3 reibungsvermindernd belegt, die bezüglich der axialen Reifenmitte 17 weiter außen liegt. Durch diese Zuordnung entfällt bei Kurvenfahrt praktisch kein Radlastanteil auf die Stirnseiten 6 der reibungsvermindernden Beläge 5 , wodurch eine Absenkung des über der Lauffläche 2 gemittelten Reibungsbeiwertes (») ausgeschlossen ist.

Die Breite b der reibungsvermindernden Beläge 5 entspricht der Flankenbreite, also der Profiltiefe T dividiert durch den Cosinus des Flankenwinkels , der zwischen der jeweiligen Laufflächennormalen N und der Flanke 4 liegt. Angesichts der vernachlässigbaren Größe von Maßänderungen infolge der Vulkanisation wird die Breite der reibungsvermindernden Beläge mit dem gleichen Symbol bezeichnet wie die Breite der Kautschukstreifen 13 zur Herstellung dieser Beläge 5 in der Figurenfolge 8, eben mit "b".

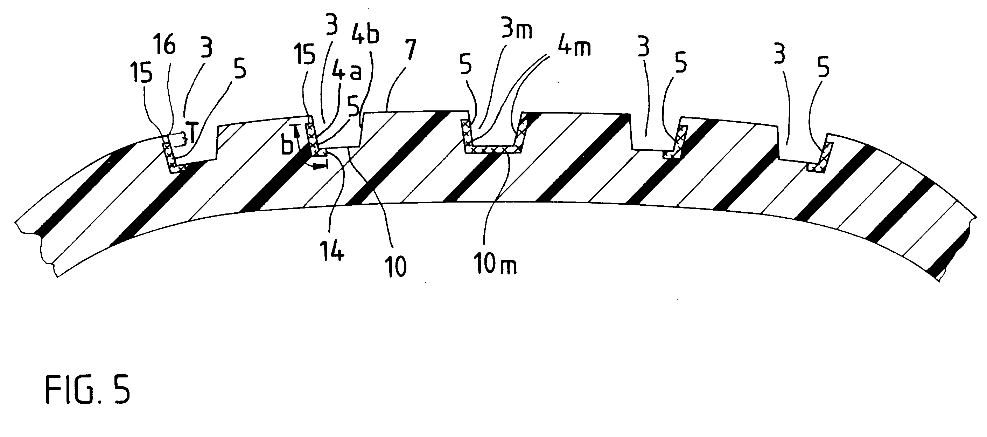

Die Figur 5 zeigt in analoger Darstellung zur vorhergehenden Figur einen weiteren erfindungsgemäßen Reifen, der im Gegensatz zur vorangehenden Figur über fünf gleichmäßig verteilte Profillängsrillen 3 in der Lauffläche 2 verfügt, also eine Mittelrille 3m aufweist. Während die außermittigen Rillen 3 wie in Figur 4 ausgebildet sind, ist die Mittelrille wie in Figur 2 ausgebildet; es sind also beide Flanken 4m und der Rillengrund 10m mit einem reibungsvermindernden Belag 5 ausgestattet.

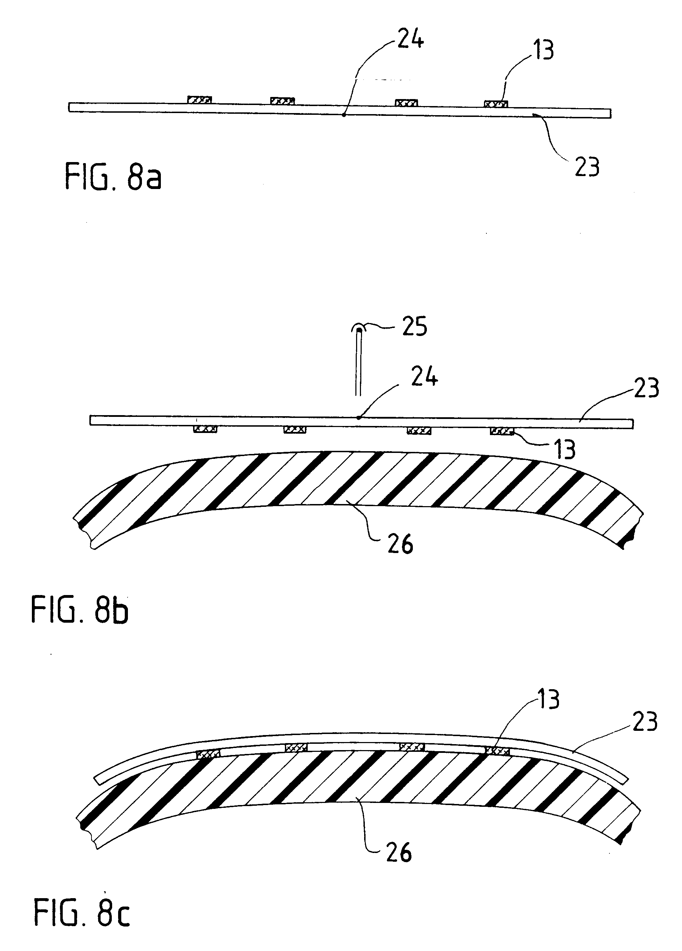

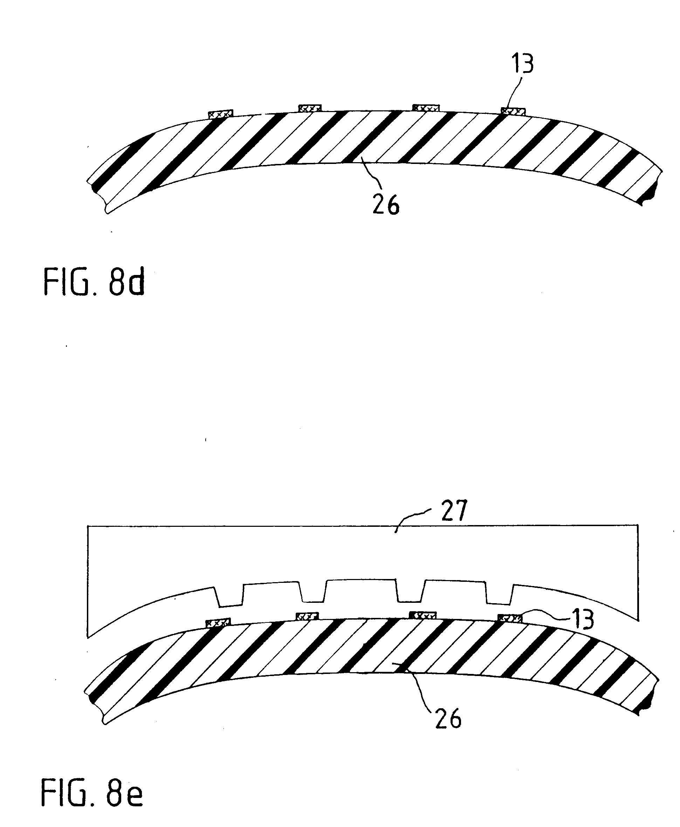

Für die Herstellbarkeit erfindungsgemäßer Reifen in der Großserie ist die Frage wesentlich, welche Toleranzen beim Aufbringen der Kautschukstreifen (13 in Figuren 8) auf den im übrigen fertigen Rohling gewährt werden können:
Zunächst wird die Lagegenauigkeit des Randes 15, der nach Abformung in der Vulkanisationspresse zur Laufflächenperipherie 7 hin weisen soll, behandelt. Der an diesem Rand 15 tolerierbare Fehler hängt davon ab, wie dicht der reibungsvermindernde Belag 5 an die Laufflächenperipherie 7 herangeführt sein muß, um den durch die Erfindung angestrebten Effekt, den früheren Steinauswurf, in ausreichender Ausprägung zu erhalten; nach bisheriger Erkenntnis wird der Steinauswurf kaum verschlechtert, wenn der reibungsvermindernde Belag 5 schon 5 mm vor der Laufflächenperipherie 7 endet. Dies hängt anscheinend mit der dort weiteren Öffnung der Längsrillen 3 zusammen. Eine Randverschiebung in die andere Richtung würde hingegen zu einem Hereinragen der reibungsvermindernden Beläge 5 in die Laufflächenperipherie 7 über die Belagstirnflächen 6 hinaus führen was sich in einer Verschlechterung des über der Lauffläche gemittelten Reibungsbeiwertes » niederschlagen würde; zu dieser Seite hin sollte deshalb keine Toleranz gewährt werden. Bezogen auf die Kante 16 zwischen Laufflächenperipherie 7 und zu belegender Längsrillenflanke 4 (bzw. 4a in nur einflankig belegten Versionen) kann also ein Toleranzfeld T von 0 bis 5 mm zugelassen werden.

Wegen geringer Wichtigkeit der Frage, ob und ggf. wie weit der reibungsvermindernde Belag 5 in den Rillengrund 10 reicht, kann bei einflankig belegten Rillen 3 der Rand 14 jedes aufzulegenden Kautschukstreifens 13, der den Rillengrund 10 belegen soll, in der Größe der Rillenweite w im Rillengrund 10 toleriert sein. Somit braucht - nahezu unabhängig von der Toleranz der streifenbreite b - beim Aufbringen der Kautschukstreifen 13 für einflankig zu belegende Rillen 3 nur der Rand 15 ausgerichtet zu werden, der nach Abformung in der Vulkanisationspresse zur Laufflächenperipherie 7 hin weisen soll.

Daß dieser besondere Vorteil der Herstellungserleichterung bei Mittelrillen 3m - wie in dieser Figur 5 dargestellt - nicht genutzt werden sollte, stört wenig, da aufgrund der Singularität dieser Mittelrille 3m eine Ausrichtung des für ihre Belegung erforderlichen Kautschukstreifens möglich ist. Zweckmäßigerweise ist der Kautschukstreifen selbst, der zur Belegung bzw. (siehe Figurenfolge 8) der entsprechende Träger 23 mit einer Mittenmarkierung 24 versehen, die dann im letzten Stadium der Rohlingserstellung vom Reifenwickler nur noch auf eine Mittenmarkierung an der Aufbaumaschine ausgerichtet zu werden braucht.

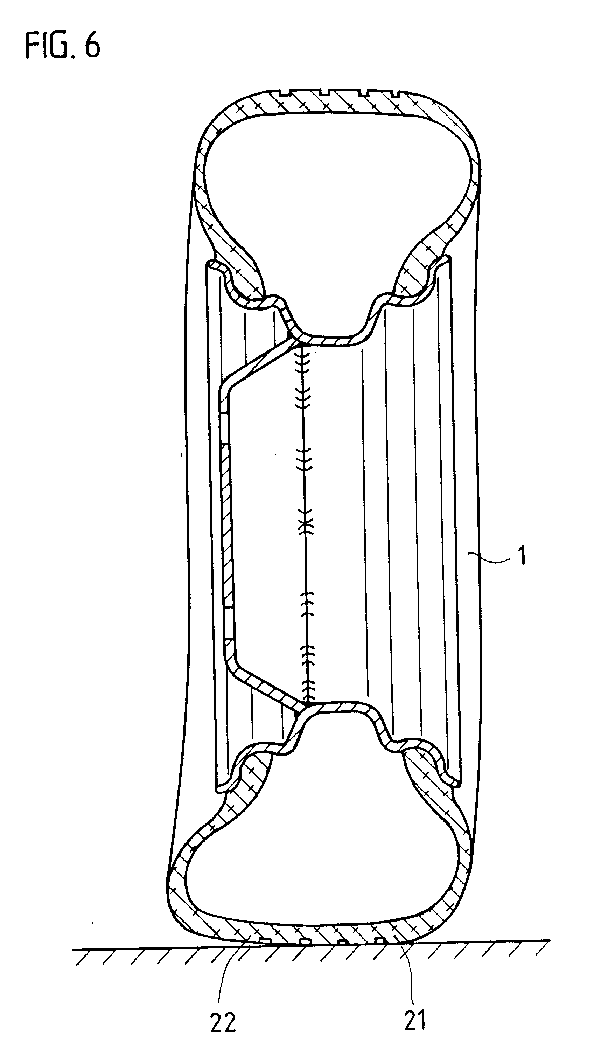

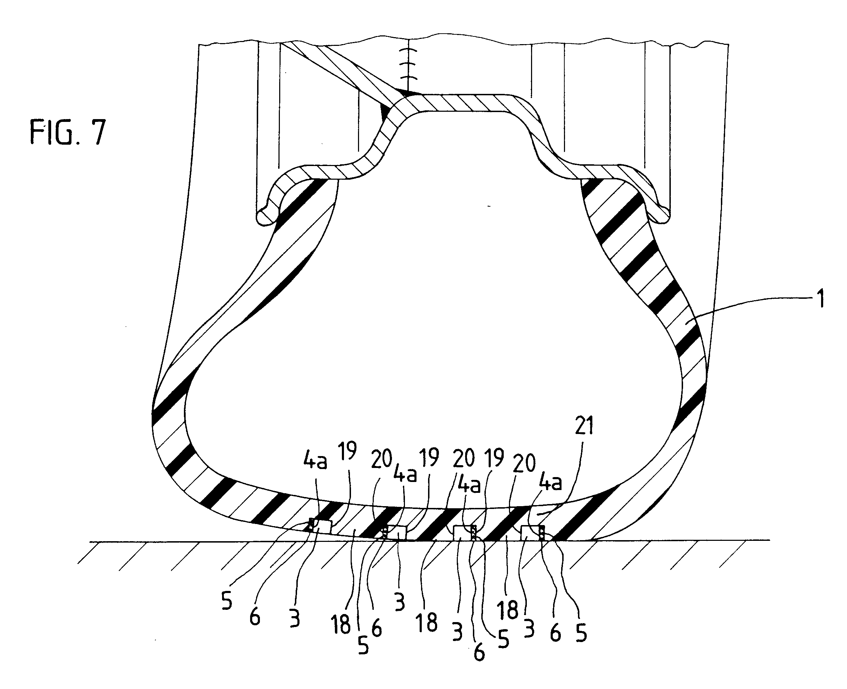

Die Verfahrensvorteile durch einflankige Belegung axial nicht mittiger Rillen 3 sind weiterhin aus der Figurenfolge 8 ersichtlich; anhand der folgenden Figuren 6 und 7 sollen die konstruktiven oder funktionellen Vorteile der einflankigen Belegung erläutert werden. Die Figuren 6 und 7 dienen somit der Erläuterung des Anspruches 10 mit seinen Unteransprüchen 11 und 12, insbesondere des Anspruches 11.

Die der Übersicht dienenden Figur 6 zeigt im Querschnitt einen Reifen entsprechend Figur 4 in Kurvenfahrt nach links und die durch die Seitenführungskraft hervorgerufene Reifenverwindung, durch die die Druckverteilung in der Bodenaufstandsfläche asymmetrisch verzerrt wird, sodaß sich das Druckmaximum zur kurvenäußeren Seite (in der Figur nach rechts) verschiebt. Bei der gezeigten extremen Kurvenfahrt an der Haftgrenze geht die Druckverteilungsverzerrung so weit, daß praktisch nur noch die kurvenäußere Laufflächenhälfte 21 die Fahrbahn berührt, während die kurveninnere (22) abheben kann, wie in der Figur zur Verdeutlichung der Druckverteilungsverzerrung gezeichnet.

Die Figur 7 ist ein detaillierter Ausschnitt aus der vorangehenden Figur in vergrößerter Darstellung. Hier wird gezeigt, daß sich nicht nur der Reifen 1 insgesamt verwindet sondern auch die einzelnen Stege 18 zwischen den Längsrillen 3. Dies führt in analoger Weise zu einer erhöhten Normalkraft auf der kurvenäußeren Seite 19 der Stege 18 und zu einer verminderten (oder im gezeigten Extremfall gar keiner) Normalkraft auf der kurveninneren Seite 20 der Stege 18.

Um jede Minderung der maximalmöglichen Seitenführungskraft zu unterbinden sind gemäß dieser Ausbildung auf der kurvenäußeren Seite 19 der Stege 18 - das ist die kurveninnere Seite der Rillen 3 - in der im wesentlichen tragenden Laufflächenhälfte reibungsvermindernde Stirnflächen 6 der reibungsvermindernden Beläge 5 vermieden durch Beschränkung der reibungsvermindernden Beläge 5 auf die kurvenäußere Rillenflanke 4a in der höher oder ausschließlich belasteten Laufflächenhälfte 21.

Die Figurenfolge 8a bis 8e zeigt die bevorzugte Herstellung eines erfindungsgemäßen Reifens, wobei es insbesondere um eine gleichermaßen genaue wie wirtschaftliche Positionierung der Kautschukstreifen 13 , die zu den reibungsvermindernden Belägen 5 zusammen mit dem übrigen Rohling verheizt werden sollen, geht.

Die Kautschukstreifen 13, die nach Vulkanisation einen geringeren Reibungsbeiwert als die Laufflächenperipherie aufweisen, werden zunächst auf eine als Träger 23 bezeichnete Bahn aufgebracht. Bereits hierbei wird die Position aller Streifen 13 zueinander festgelegt.

Das Material des Trägers 23 ist so auf die Kautschukmischung der Streifen 13 abgestimmt, daß die Streifen 13 durch ihre Klebrigkeit auf dem Träger sicher haften, andererseits aber die Klebhaftung zwischen der Kautschukmischung der Streifen 13 und der Kautschukmischung der Laufflächenperipherie größer ist.

Die Figur 8a zeigt die Herstellungsphase, wo die Streifen 13 gerade auf den Träger 23 aufgelegt sind. Der hierdurch gebildete Verbund wird zweckmäßigerweise möglichst kontinuierlich hergestellt und anschließend auf eine Transport- oder Zwischenlagerrolle aufgewickelt.

Eine solche Rolle von Verbund aus positionierten Streifen 13 und Träger wird zu jeder Reifenaufbaumaschine für erfindungsgemäße Reifen transportiert. Als letztem Schritt in der Rohlingserstellung wird der Verbund mit den Streifen 13 nach radial innen weisend von der Rolle abgezogen, abgelängt und entsprechend der Position der beabsichtigten Rillen ausgerichtet. Zur leichten und präzisen Ausrichtung des Verbundes weist zweckmäßigerweise der Träger 23 eine Mittenmarkierung 24 auf. Diese Mittenmarkierung 24 kann durch einen dünnen lichtreflektierenden Metalldraht, der vorzugsweise in den Träger eingewebt ist, realisiert sein. Weiterhin sollte eine bestimmte Position am Reifenrohling markiert sein; zweckmäßigerweise wird dies die (axiale) Reifenmitte sein, die sich besonders wirkungsvoll durch einen Lichtstrahl 25 markieren läßt. Beim Ausrichten sind nur beide Markierungen 24 und 25 zur Deckung zu bringen. Die erreichte Deckung wird durch signifikante Lichtreflektion deutlich; die Figur 8b zeigt gerade diese Herstellungsphase.

Die Figur 8c zeigt die Phase, wo der ausgerichtete Verbund aus Streifen 13 und Träger 23 gerade auf den übrigen Rohling 26 aufgelegt ist.

Die Figur 8d zeigt den fertiggestellten Rohling nach Abziehen des Trägers und Verbleib der Streifen 13 auf dem übrigen Rohling 26.

Anschließend wird der Rohling in an sich bekannter Weise in einer beheizten Form unter Druck vulkanisiert. Die Figur 8e zeigt im gleichen Bildausschnitt wie die vorigen Figuren dieser Figurenfolge 8 den Rohling 26 mit seinen Kautschukstreifen 13 kurz vor dem schließen der im Laufflächenbereich radial in Segmente 27 geteilten Vulkanisationsform. Die Figur zeigt deutlich, daß es auf die richtige Positionierung der Kautschukstreifen 13 auf dem Rohling 26 ankommt, damit nicht die falschen Reifenflächen, insbesondere keine der Laufflächenperipherie reibungsvermindernd belegt werden; für die Lösung dieses Problemes ist mit der Zwischenschaltung des Trägers (23 in 8a bis 8c) eine gleichermaßen wirkungsvolle wie kostengünstige Verfahrensweise angegeben.

Abschließend wird tabellarisch das Mischungsrezept einer Kautschukmischung angegeben, aus der Kautschukstreifen 13 extrudiert werden können, die nach Vulkanisation einen kleineren Reibungsbeiwert » liefern als ansonsten in der Lauffläche üblich, nämlich etwa »=0,5 :

| Stoff: | Kautschukmassenprozent |
|---|---|
| NR (Naturkautschuk) | 60 |
| BR (Butylkautschuk) | 40 |
| Ruß N 339 | 35 |
| Zinkweiß (ZnO) | 5 |
| Stearinsäure | 3 |
| Standard-Lichtschutzwachs (C₂₂H₄₆ bis C₄₀H₈₂)c | 2 |
| ASM 6 PPD (N,N'-di(2-octyl)-p-phenylendiamin) | 2 |
| Schwefel | 1,8 |
| TBBS (Benzothiazyl-2-tertiär-butyl-sulfenamid) | 1,6 |
| DPG (Diphenylguanidin) | 0,3 |
| Summe | 150,7 |

Die Massenprozent bezogen auf die Gesamtmischung (statt nur auf die Gesamtmasse aller Kautschuke) ergibt sich nach Division oberer Tabellenwerte durch 150,7.

Die Erfindung lehrt die Reibbeiwertverminderung der Profilrillen zur Verringerung des Steinefangens. In Ermangelung einer Technik, mit der der Reibbeiwert eines einstückigen Gummis lokal differenziert eingestellt werden könnte, wird insbesondere das Aufbringen eines reibbeiwertverringernden Belages auf die Rillenflanken dargestellt. Eine Bezugszeichenliste ist Bestandteil der Beschreibung.

### Bezugszeichen

- 1: Fahrzeugreifen
- 2: Lauffläche
- 3: Profilrille
- 3m: mittlere Profillängsrille
- 4: Flanken der Profilrillen
- 4a: in solchen Reifen 1 , deren Profilrillen 3 nur auf einer ihrer jeweils zwei Flanken 4 reibungsvermindernd belegt sind, die reibungsvermindend belegten Flanken (im Unterschied zu 4b)
- 4b: nicht reibungsvermindernd belegte Flanken
- 4m: Flanken einer Mittelrille 3m
- 5: reibungsvermindernder Belag auf Flanken 4 bzw. 4a
- 5.1: erste (unterste) Schicht in einem mehrschichtig ausgebildeten reibungsvermindernden Belag 5
- 5.2: zweite Schicht in einem mehrschichtig ausgebildeten reibungsvermindernden Belag 5
- 6: Stirnflächen der reibungsvermindernden Beläge 5
- 7: Peripherie der Lauffläche 2 = radial äußerste Flächen des Reifens = die Flächen der Lauffläche, die zur Berührung der Straßenoberfläche vorgesehen sind
- 8: Felge
- 9: Radachse
- 10: Rillengrund
- 11: Basis = Bereich zwischen oberster Gürtellage 12 und Profilrillengrund 10
- 12: oberste Gürtellage
- 13: Kautschukstreifen zur Herstellung reibungsvermindernder Beläge 5
- 14: der Rand eines Kautschukstreifens 13, der zum Rillengrund 10 hin weist
- 15: der Rand eines Kautschukstreifens 13, der zur Laufflächenperipherie 7 hin weist
- 16: Kante zwischen Laufflächenperipherie 7 und belegter Flanke 4 bzw. 4a bzw. 4m
- 17: axiale Reifenmitte
- 18: Steg in der Lauffläche 2 zwischen je zwei Längsrillen 3
- 19: kurvenäußere Seite der Stege 18
- 20: kurveninnere Seite der Stege 18
- 21: kurvenäußere Laufflächenhälfte
- 22: kurveninnere Laufflächenhälfte
- 23: Träger (Gewebe, verstärkte Folie oder dergleichen) zum zwischenzeitlichen Aufbringen der Kautschukstreifen 13 darauf
- 24: Mittenmarkierung am Träger 23
- 25: Mittenmarkierung an Reifenaufbaumaschine
- 26: übriger Rohling (ohne Streifen 13)
- 27: Segment der Vulkanisationsform
- b: Breite der Kautschukstreifen 13
- T: Toleranzfeld für die Lage des Randes 15 eines Kautschukstreifens 13

## Patentansprüche

1. Fahrzeugluftreifen (1) mit Profilrillen (3) in der Lauffläche (2), die im wesentlichen aus einer Gummimischung besteht,
**dadurch gekennzeichnet,** daß die Flanken (4) der Rillen (3) mit einem reibungsverminderndem Material belegt sind, sodaß der reibungsvermindernde Belag (5) auf den Flanken (4) gegenüber Steinen einen geringeren Reibungsbeiwert (») aufweist als der Gummi in der Laufflächenperipherie (7).

2. Fahrzeugluftreifen (1) nach Anspruch 1 dadurch gekennzeichnet, daß der reibungsvermindernde Belag (5) gegenüber Steinen einen Reibungsbeiwert (») von weniger als 0,6 aufweist.

3. Fahrzeugluftreifen (1) nach Anspruch 1 dadurch gekennzeichnet, daß der reibungsvermindernde Belag (5) gegenüber Steinen einen Reibungsbeiwert (») von weniger als 0,4 aufweist.

4. Fahrzeugluftreifen (1) nach Anspruch 4 dadurch gekennzeichnet, daß der reibungsvermindernde Belag (5) aus einer Gummimischung besteht.

5. Fahrzeugluftreifen (1) nach Anspruch 1 dadurch gekennzeichnet, daß in an sich bekannter Weise die äußere Peripherie (7) der Lauffläche (2) zumindest im wesentlichen - das heißt allenfalls mit Ausnahme der schmalen Stirnflächen (6) der reibungsvermindernden Beläge (5) auf den Rillenflanken (4) - aus einer solchen Gummimischung besteht, die einen Reibungsbeiwert (») gegenüber Asphalt und dergleichen von mindestens 0,8 im Neuzustand des Reifens (1) aufweist.

6. Fahrzeugluftreifen (1) nach Anspruch 1 dadurch gekennzeichnet, daß der reibungsvermindernde Belag (5) aus mehreren Schichten (5.1 , 5.2) besteht.

7. Fahrzeugluftreifen (1) nach Anspruch 6 dadurch gekennzeichnet, daß die erste Schicht (5.1) des reibungsvermindernden Belages eine Härte aufweist, die zwischen der Härte des Gummis, das im wesentlichen die Laufflächenperipherie (7) bildet, und der nächsten Schicht (5.2) des reibungsvermindernden Belages (5) liegt.

8. Fahrzeugluftreifen (1) nach Anspruch 4 dadurch gekennzeichnet, daß der reibungsvermindernde Belag (5) bei einschichtiger Ausbildung eine um 5 bis 8 Shore-Härtegrade größere Härte als das darunter befindliche Gummi im Neuzustand besitzt und eine Dicke zwischen 0,1 mm und 1,0 mm aufweist.

9. Fahrzeugluftreifen (1) nach Anspruch 7 mit zweischichtigem reibungsverminderndem Belag (5) dadurch gekennzeichnet, daß die erste Schicht (5.1) des reibungsvermindernden Belages (5) bei einer Schichtstärke zwischen 0,3 und 0,6 mm um 3 bis 6 Shore-Härtegrade härter ist als die darunter befindliche Gummimischung und, daß die zweite Schicht (5.2) des reibungsvermindernden Belages (5) bei einer Schichtstärke zwischen 0,4 und 0,6 mm um weitere 2 bis 5 Shore-Härtegrade härter ist als die erste Schicht (5.1) des reibungsvermindernden Belages (5).

10. Fahrzeugluftreifen nach Anspruch 1 dadurch gekennzeichnet, daß von den Flanken (4) der außerhalb der axialen Reifenmitte gelegenen Profillängsrillen (3) jeweils nur eine (4a) einen reibungsvermindernden Belag aufweist.

11. Fahrzeugluftreifen nach Anspruch 10 dadurch gekennzeichnet, daß nur die axial außen liegende Flanke (4a) einer jeden außermittig liegenden Längsrille (3) des Reifens (1) einen reibungsvermindernden Belag (5) aufweist.

12. Fahrzeugluftreifen nach Anspruch 10 mit einer axial mittigen Profillängsrille (3m) dadurch gekennzeichnet, daß beide Flanken (4m) der mittigen Rille (3m) einen reibungsvermindernden Belag (5) aufweisen.

13. Verfahren zur Herstellung eines Fahrzeugluftreifens gemäß Anspruch 1
**dadurch gekennzeichnet,** daß der reibungsvermindernde Belag als Kautschukmischungs-Streifen auf den Rohling aufgebracht wird.

14. Verfahren nach Anspruch 13 dadurch gekennzeichnet, daß der reibungsvermindernde Belag als mehrere nebeneinander liegende Kautschukmischungsstreifen auf den Rohling aufgebracht wird, wobei jeder Streifen so ausgerichtet wird, daß er nach Abformung in der Vulkanisationsform im wesentlichen nur die Profilrillen abdeckt.

15. Verfahren nach Anspruch 13 dadurch gekennzeichnet, daß der reibungsvermindernde Belag als mehrere nebeneinander liegende Kautschukmischungs-Streifen auf den Rohling aufgebracht wird, wobei jeder Streifen so ausgerichtet wird, daß er nach Abformung in der Vulkanisationsform im wesentlichen nur die zu belegenden Flanken der Profilrillen abdeckt.

16. Verfahren nach Anspruch 14 oder 15 dadurch gekennzeichnet, daß die verschiedenen nebeneinanderliegenden - gegebenenfalls gemäß Anspruch 6 mehrschichtigen - Kautschukstreifen (13) zunächst auf ein biegsames, dehnungssteifes Träger (23) aufgebracht und ausgerichtet werden, beispielsweise auf eine verstärkte Folie, und, daß an der Reifenaufbaumaschine als letzte Lage eben dieses Träger (23) mit den Kautschukstreifen (13) nach radial innen weisend aufgelegt wird, sodaß alle Kautschukstreifen (13) mit einem einzigen Arbeitsgang ausgerichtet sind, wonach das Träger (23) wieder abgezogen wird.

17. Verfahren nach Anspruch 14 oder 15 zur Herstellung von Fahrzeugluftreifen gemäß Anspruch 6 dadurch gekennzeichnet, daß jeweils nur eine Schicht der verschiedenen nebeneinanderliegenden Kautschukmischungs-Streifen zunächst auf ein biegsames, dehnungssteifes Träger (23) aufgebracht und ausgerichtet werden, beispielsweise auf eine verstärkte Folie, und die nächste Schicht der nebeneinanderliegenden Kautschukstreifen (13) auf eine andere Bahn eines biegsamen, dehnungssteifen Träger (23) aufgebracht wird und, daß an der Reifenaufbaumaschine als die zwei letzten Lagen eben diese Träger (23) nacheinander mit den Kautschukmischungs-Streifen nach radial innen weisend aufgelegt werden, sodaß jede Schicht der Kautschukmischungs-Streifen mit einem einzigen Arbeitsgang ausgerichtet sind, und das jeweilige Träger (23) nach Ausrichtung und gegebenenfalls Anrollerung der Schichten wieder abgezogen wird.

18. Verfahren nach Anspruch 16 oder 17 bei dem die reibungsvermindernden Kautschukmischungs-Streifen an die darunter befindlichen Reifenschichten angerollert werden, dadurch gekennzeichnet, daß das Anrollern vor dem Abziehen des Träger (23) erfolgt.

19. Verfahren nach Anspruch 11 dadurch gekennzeichnet, daß zunächst die gesamte Lauffläche mit einem gegebenenfalls mehrschichtigen reibungsverminderndem Kautschmischungs-Streifen belegt wird und nach der Vulkanisation die reibungsvermindernde Gummimischung von der Peripherie der Lauffläche wieder entfernt wird.

## Claims

1. Pneumatic vehicle tyre (1) having profile grooves (3) in the tread surface (2), which is substantially formed from a rubber mixture, characterised in that the walls (4) of the grooves (3) are covered with a friction-reducing material, so that the friction-reducing covering (5) on the walls (4) has a smaller coefficient of friction (») relative to stones than the rubber in the tread surface periphery (7).

2. Pneumatic vehicle tyre (1) according to claim 1, characterised in that the friction-reducing covering (5) has a coefficient of friction (») relative to stones of less than 0.6.

3. Pneumatic vehicle tyre (1) according to claim 1, characterised in that the friction-reducing covering (5) has a coefficient of friction (») relative to stones of less than 0.4.

4. Pneumatic vehicle tyre (1) according to claim 1, characterised in that the friction-reducing covering (5) is formed from a rubber mixture.

5. Pneumatic vehicle tyre (1) according to claim 1, characterised in that, in a manner known per se, the external periphery (7) of the tread surface (2) is formed at least substantially - that is to say possibly with the exception of the narrow end faces (6) of the friction-reducing coverings (5) on the groove walls (4) - from such a rubber mixture which has a coefficient of friction (») relative to asphalt and the like of at least 0.8 in the new state of the tyre (1).

6. Pneumatic vehicle tyre (1) according to claim 1, characterised in that the friction-reducing covering (5) is formed from a plurality of layers (5.1, 5.2).

7. Pneumatic vehicle tyre (1) according to claim 6, characterised in that the first layer (5.1) of the friction-reducing covering has a hardness lying between the hardness of the rubber, which substantially forms the tread surface periphery (7), and the next layer (5.2) of the friction-reducing covering (5).

8. Pneumatic vehicle tyre (1) according to claim 4, characterised in that, in a one-layered configuration, the friction-reducing covering (5) has a hardness which is greater, by 5 to 8 degrees of Shore hardness, than the rubber, situated therebeneath, in the new state and has a thickness of between 0.1 mm and 1.0 mm.

9. Pneumatic vehicle tyre (1) according to claim 7 having a two-layered, friction-reducing covering (5), characterised in that, with a layer thickness of between 0.3 and 0.6 mm, the first layer (5.1) of the friction-reducing covering (5) is harder, by 3 to 6 degrees of Shore hardness, than the rubber mixture situated therebeneath, and in that, with a layer thickness of between 0.4 and 0.6 mm, the second layer (5.2) of the friction-reducing covering (5) is harder, by an additional 2 to 5 degrees of Shore hardness, than the first layer (5.1) of the friction-reducing covering (5).

10. Pneumatic vehicle tyre according to claim 1, characterised in that, of the walls (4) of the longitudinal profile grooves (3) situated externally of the axial centre of the tyre, only one wall (4a) has a friction-reducing covering.

11. Pneumatic vehicle tyre according to claim 10, characterised in that only the axially externally situated wall (4a) of each eccentrically disposed longitudinal groove (3) of the tyre (1) has a friction-reducing covering (5).

12. Pneumatic vehicle tyre according to claim 10 having an axially central longitudinal profile groove (3m), characterised in that both walls (4m) of the central groove (3m) have a friction-reducing covering (5).

13. Method of producing a pneumatic vehicle tyre according to claim 1, characterised in that the friction-reducing covering is applied to the blank as a strip of rubber mixture.

14. Method according to claim 13, characterised in that the friction-reducing covering is applied to the blank as a plurality of strips of rubber mixture situated adjacent one another, each strip being so aligned that it substantially only covers the profile grooves after the moulding process in the vulcanisation mould.

15. Method according to claim 13, characterised in that the friction-reducing covering is applied to the blank as a plurality of strips of rubber mixture situated adjacent one another, each strip being so aligned that it substantially only covers the walls of the profile grooves to be covered after the moulding process in the vulcanisation mould.

16. Method according to claim 14 or 15, characterised in that the various rubber strips (13) which are situated adjacent one another - possibly multi-layered in accordance with claim 6 - are initially applied to and aligned with a flexible, expansion-resistant carrier (23), a reinforced film for example, and in that it is precisely this carrier (23) which is provided with the rubber strips (13) in a radially inward direction on the tyre assembling machine as the final ply, so that all of the rubber strips (13) are aligned with one another in a single operation, after which the carrier (23) is removed again.

17. Method according to claim 14 or 15 for producing pneumatic vehicle tyres according to claim 6, characterised in that only one layer of the various strips of rubber mixture situated adjacent one another is initially applied to and aligned with a flexible, expansion-resistant carrier (23), a reinforced film for example, and the next layer of the rubber strips (13) situated adjacent one another is applied to a different web of a flexible, expansion-resistant carrier (23), and in that it is precisely these carriers which are provided one after the other with the strips of rubber mixture in a radially inward direction on the tyre assembling machine as the last two layers, so that each layer of the strips of rubber mixture are aligned in a single operation, and the respective carrier (23) is removed again after the alignment and possible compression of the layers.

18. Method according to claim 16 or 17, wherein the friction-reducing strips of rubber mixture are compressed onto the tyre layers situated therebeneath, characterised in that the compression process is effected prior to the removal of the carrier (23).

19. Method according to claim 11, characterised in that the entire tread surface is initially covered with a possibly multi-layered, friction-reducing strip of rubber mixture, and the friction-reducing rubber mixture is again removed from the periphery of the tread surface after the vulcanisation process.

## Revendications

1. Pneumatique pour véhicule automobile (1) avec des stries de profil (3) dans la bande de roulement (2), qui est essentiellement réalisé dans un mélange de caoutchoucs, caractérisé en ce que les flancs (4) des stries (3) sont revêtus d'un matériau réduisant l'adhérence, de sorte que le revêtement (5) réduisant l'adhérence présente sur les flancs (4), par rapport aux pierres, un coefficient d'adhérence (») inférieur au caoutchouc de la périphérie (7) de la bande de roulement.

2. Pneumatique pour véhicule automobile (1) selon la revendication 1, caractérisé en ce que le revêtement (5) réduisant l'adhérence présente par rapport aux pierres un coefficient d'adhérence (») inférieur à 0,6.

3. Pneumatique pour véhicule automobile (1) selon la revendication 1, caractérisé en ce que le revêtement (5) réduisant l'adhérence présente par rapport aux pierres un coefficient d'adhérence (») inférieur à 0,4.

4. Pneumatique pour véhicule automobile (1) selon la revendication 4, caractérisé en ce que le revêtement (5) réduisant l'adhérence est réalisé dans un mélange de caoutchoucs.

5. Pneumatique pour véhicule automobile (1) selon la revendication 1, caractérisé en ce que de manière connue en soi la périphérie (7) extérieure de la bande de roulement (2) est réalisée au moins pour l'essentiel - c'est-à-dire dans tous les cas à l'exception des surfaces frontales (6) étroites des revêtements (5) réduisant l'adhérence sur les flancs (4) des stries - dans un mélange de caoutchoucs qui présente un coefficient d'adhérence (») par rapport à l'asphalte et similaire d'au moins 0,8, à l'état neuf du pneumatique (1).

6. Pneumatique pour véhicule automobile (1) selon la revendication 1, caractérisé en ce que le revêtement (5) réduisant l'adhérence est constitué de plusieurs couches (5.1, 5.2).

7. Pneumatique pour véhicule automobile (1) selon la revendication 6, caractérisé en ce que la première couche (5.1) du revêtement réduisant l'adhérence présente une dureté qui se situe entre la dureté du caoutchouc, qui forme essentiellement la périphérie (7) de la bande de roulement, et la couche (5.2) suivante du revêtement (5) réduisant l'adhérence.

8. Pneumatique pour véhicule automobile (1) selon la revendication 4, caractérisé en ce que le revêtement (5) réduisant l'adhérence dans le cas où il est constitué d'une seule couche présente une dureté supérieure de 5 à 8 degrés de dureté Shore à celle du caoutchouc, situé au-dessous à l'état neuf et une épaisseur comprise entre 0,1 mm et 1 mm.

9. Pneumatique pour véhicule automobile (1) selon la revendication 7 avec revêtement (5) réduisant l'adhérence, à deux couches, caractérisé en ce que la première couche (5.1) du revêtement (5) réduisant l'adhérence est plus dure de 3 à 6 degrés de dureté Shore, pour une épaisseur de couche comprise entre 0,3 et 06 mm que le mélange de caoutchoucs se trouvant au-dessous et en ce que la seconde couche (5.2) du revêtement (5) réduisant l'adhérence est plus dure d'encore 5 degrés de dureté Shore, pour une épaisseur de couche comprise entre 0,4 et 06 mm, que la première couche (5.1) du revêtement (5) réduisant l'adhérence.

10. Pneumatique pour véhicule automobile (1) selon la revendication 1, caractérisé en ce qu'un seul flanc (4a) des flancs (4) des stries longitudinales de profil (3) situé à l'extérieur du milieu axial du pneumatique, présente un revêtement réduisant l'adhérence.

11. Pneumatique pour véhicule automobile (1) selon la revendication 10, caractérisé en ce que seul le flanc (4a), situé axialement à l'extérieur, de chaque strie longitudinale (3) située à l'extérieur du milieu du pneu (1), présente un revêtement (5) réduisant l'adhérence.

12. Pneumatique pour véhicule automobile (1) selon la revendication 10 avec une strie longitudinale profilée (3m) située axialement au centre, caractérisé en ce que deux flancs (4m) de la strie centrale (3m), présentent un revêtement (5) réduisant l'adhérence.

13. Procédé de fabrication d'un pneumatique pour véhicule automobile selon la revendication 1, caractérisé en ce que le revêtement réduisant l'adhérence est appliqué sur l'ébauche sous la forme d'une bande faite d'un mélange de caoutchoucs.

14. Procédé selon la revendication 13, caractérisé en ce que le revêtement réduisant l'adhérence est appliqué sur l'ébauche, sous la forme de plusieurs bandes d'un mélange de caoutchoucs, juxtaposées chaque bande étant orientée de manière qu'après formage dans le moule de vulcanisaton, elle ne recouvre essentiellement que les stries profilées.

15. Procédé selon la revendication 13, caractérisé en ce que le revêtement réduisant l'adhérence est appliqué sur l'ébauche sous la forme de plusieurs bandes d'un mélange de caoutchoucs, juxtaposées chaque bande étant orientée, de manière qu'après formage dans le moule de vulcanisation, elle ne recouvre essentiellement que les flancs à revêtir des stries profilées.

16. Procédé selon les revendications 14 ou 15, caractérisé en ce que les différentes bandes de caoutchouc (13) juxtaposées - éventuellement en plusieurs couches selon la revendication 6 - sont d'abord appliquées et orientées sur un support (23) flexible, non extensible, par exemple sur une feuille renforcée et, en ce que sur la machine de construction des pneumatiques, on place comme dernière couche précisément ce support (23) avec les bandes de caoutchouc (13), dirigées radialement vers l'intérieur, ce qui fait que toutes les bandes de caoutchouc (13) sont orientées en une seule opération, après quoi le support (23) est à nouveau retiré.

17. Procédé selon les revendications 14 ou 15 de fabrication de pneumatique pour véhicule automobile selon la revendication 6, caractérisé en ce qu'une seule couche des différentes bandes juxtaposées, faites dans un mélange de caoutchoucs, est d'abord appliquée et orientée sur un support (23) flexible, non extensible, par exemple sur une feuille renforcée, et la couche suivante des bandes de caoutchouc (13) juxtaposées est appliquée sur une autre voie d'un support (23) flexible, non extensible, et en ce que sur la machine de construction des pneumatiques sont appliqués, dirigés radialement vers l'intérieur, en tant que deux dernières couches, précisément ces supports (23), l'un après l'autre, avec les bandes de mélange de caoutchoucs, ce qui fait que chaque couche de bandes de mélange de caoutchoucs est orientée en une seule opération et le support (23) respectif est à nouveau enlevé après orientation et éventuellement roulement sur ces couches.

18. Procédé selon les revendications 16 ou 17 dans lequel les bandes de mélange de caoutchoucs réduisant l'adhérence sont soumises à un roulement sur les couches de pneumatique se trouvant en dessous caractérisé en ce que le roulement s'effectue avant l'enlèvement du support (23).

19. Procédé selon la revendication 11, caractérisé en ce que d'abord toute la surface de roulement est revêtue d'une bande de mélange de caoutchoucs réduisant l'adhérence, éventuellement à plusieurs couches, et après vulcanisation le mélange de caoutchoucs réduisant l'adhérence est à nouveau enlevé de la périphérie de la bande de roulement.
